# EUROPÄISCHE PATENTSCHRIFT

(11) **EP 2 055 542 B1**
(45) Veröffentlichungstag und Bekanntmachung des Hinweises auf die Patenterteilung: **16.04.2014**
(21) Anmeldenummer: 08018537.4
(22) Anmeldetag: 23.10.2008
(51) Int. Cl.: B60T 13/26, B60T 13/68, B60T 15/04

(54) **Druckmittelbetätigte Bremseinrichtung eines Zugfahrzeugs mit einem gegenläufige Drücke für Anhängerbremsen erzeugenden Festellbremsmodul**
Braking device for a traction vehicle activated by compressing a medium with a handbrake that produces opposing pressures for trailer brakes
Dispositif de frein actionné par un moyen de pression d'un véhicule sur rail doté d'un module de frein fixe produisant une pression contraire pour des freins de remorque

(30) Priorität: 31.10.2007 DE 102007052521
(43) Veröffentlichungstag der Anmeldung: 06.05.2009
(73) Patentinhaber: KNORR-BREMSE Systeme für Nutzfahrzeuge GmbH, 80809 München (DE)
(72) Erfinder: Szell, Peter, 6342 Drágszél (HU)
(74) Vertreter: Schönmann, Kurt

(56) Entgegenhaltungen:
- DE-A1-102006 036 748
- DE-A1-102007 008 504
- DE-A1-102008 015 249

## Beschreibung

Die vorliegende Erfindung betrifft eine druckmittelbetätigte Bremseinrichtung für ein Zugfahrzeug einer Zugfahrzeug-Anhängerkombination, gemäß dem Oberbegriff von Anspruch 1.

Üblicherweise werden bei Nutzfahrzeugen als Bremsaktuatoren sog. Kombibremszylinder verwendet, bei welchen an einen als aktive Betriebsbremse aus- gestalteten Betriebsbremszylinder ein als passive Bremse ausgestalteter Federspeicherbremszylinder angekoppelt ist, In dem Betriebsbremszylinder ist ein durch ein Druckmittel betätigbarer Betriebsbremskolben längsverschieblich geführt, welcher eine Betriebsbremskammer begrenzt und mit einer auf Bremsbetätigungselemente einwirkenden Betriebsbrems-Kolbenstange verbunden ist. Demgegenüber ist in dem Federspeicherbremszylinder ein durch eine Speicherfeder betätigbarer Federspeicherbremskolben längsverschieblich geführt, welcher auf der einen Seite von einer Federspeicherbremskammer und auf der entgegen gesetzten Seite eine die Speicherfeder aufnehmende Federkammer begrenzt wird. Eine Druckbeaufschlagung der Betriebsbremskammer führt zu einem Zuspannen der Betriebsbremse, eine Druckbeaufschlagung der Federspeicherbremskammer dagegen zu einem Lösen der Federspeicherbremse. Umgekehrt führt eine Druckabsenkung in der Betriebsbremskammer zu einem Lösen der Betriebsbremse, eine Druckabsenkung in der Federspeicherbremskammer dagegen zu einem Zuspannen der Federspeicherbremse. Ein solcher Kombizylinder ist beispielsweise in der DE 29 23 359 C2 beschrieben.

Eine druckmittelbetätigte Bremseinrichtung für ein Zugfahrzeug einer Zugfahrzeug-Anhängerkombination ist beispielsweise aus der EP 1 783 019 Al bekannt. Das dort beschriebene Feststellbremsmodul beinhaltet gemäß der Ausführungsform von Fig.8 ausgehend von einem Druckreservoir ein bistabiles Ventil, ein getaktet gesteuertes Ventil, ein Relaisventil sowie ein Anhängerkontrollventil zur Durchführung einer Testfunktion im Stand sowie einen Anschluss für ein nachgeordnetes Anhängersteuerventil.

Nach der geltenden Gesetzeslage kann bei geparkten oder abgestellten Zustand einer Zugfahrzeug-Anhängerkombination, d.h. bei zugespannter Feststellbremse des Zugfahrzeugs zusätzlich die Betriebsbremse des Anhängers zugespannt sein, erforderlich ist dies jedoch nicht. Folglich bleibt es dem Anwender überlassen, ob im geparkten oder abgestellten Zustand des an ein Zugfahrzeug angekuppelten Anhängers zusätzlich auch dessen Betriebsbremsen zugespannt werden oder ob diese gelöst bleiben. Um diesbezüglich unterschiedlichen Kundenwünschen Rechnung zu tragen, sollte der Zugfahrzeughersteller beide Funktionalitäten des Anhängers, d.h. Parken mit gelöster Betriebsbremse oder mit zugespannter Betriebsbremse mit einem möglichst geringen Aufwand realisieren können.

Die gattungsbildende DE 10 2008 015249 Al beschreibt eine druckmittelbetätigte Bremseinrichtung für ein Zugfahrzeug einer Zugfahrzeug Anhängerkombination, beinhaltend eine Feststellbremseinrichtung mit einem ein wenigstens einem geparkten oder abgestellten Zustand des Zugfahrzeugs entsprechendes elektrisches Signal erzeugenden Feststellbremssignalgeber, welcher durch das elektrische Signal eine elektronische Steuereinrichtung eines Feststellbremsmoduls steuert, in welches eine Ventileinrichtung sowie ein be- oder entlüftbarer Anschluss für eine nachgeordnete Anhängersteuerventileinrichtung integriert sind, welche die Betriebsbremsen des Anhängers steuert, wobei das Feststellbremsmodul wenigstens einen weiteren Anschluss für eine nachgeordnete Anhängersteuerventileinrichtung aufweist und dass die Ventileinrichtung derart ausgebildet und von der elektronischen Steuereinrichtung derart ansteuerbar ist, dass auf das dem geparkten oder abgestellten Zustand des Zugfahrzeugs entsprechende Signal des Feststellbremssignalgebers hin die Feststellbremse des Zugfahrzeugs zugespannt und der eine Anschluss belüftet und der weitere Anschluss entlüftet wird und dass auf wenigstens ein weiteres Signal des Feststellbremssignalgebers hin der eine Anschluss und der wenigstens eine weitere Anschluss gleichläufig be- oder entlüftet werden.

Durch die gegenläufigen Drucksignale an den Anschlüssen für die nachgeordnete Anhängersteuerventileinrichtung kann dann bei geparkter oder abgestellter Zugfahrzeug-Anhängerkombination durch ein- und dasselbe Feststellbremsmodul die jeweils gewünschte Funktionalität des Anhängers realisiert werden, also beispielsweise ein Zuspannen der Betriebsbremse des Anhängers, wenn dessen Anhängersteuerventileinrichtung an den einen Anschluss des Festbremsmoduls angeschlossen ist oder ein Lösen oder Gelösthalten der Betriebsbremse des Anhängers, wenn dessen Anhängersteuerventileinrichtung an den anderen Anschluss des Festbremsmoduls angeschlossen ist. Beide Arten von Funktionalitäten und damit unterschiedliche Kundenwünsche können folglich durch ein und dasselbe Feststellbremsmodul erfüllt werden. Dies reduziert die Variantenvielfalt und damit die Herstellkosten des Feststellbremsmoduls. Neben der oben beschriebenen Funktionalität werden durch die Ventileinrichtung des oben genannten Stands der Technik weitere Funktionalitäten wie eine Fahrfunktion, eine Streckbremsfunktion, eine Hilfsbremsfunktion und eine Testfunktion realisiert. Hierzu weist die bekannte Ventileinrichtung ein tristabiles, durch zwei 3/2-Wegeventile vorgesteuertes 7/3-Wegeventil, ein Relaisventil sowie ein Drucksteuerteil mit wenigstens einem weiteren Ventil auf. Der Aufbau der Ventileinrichtung ist dadurch relativ komplex und kostspielig, vor allem wegen des aufwändigen tristabilen 7/3-Wegeventils.

Es ist daher Aufgabe der vorliegenden Erfindung eine druckmittelbetätigte Bremseinrichtung für ein Zugfahrzeug derart weiterzubilden, dass sie einfacher und kostengünstiger aufgebaut ist und trotzdem alle Funktionalitäten des oben beschriebenen Stands der Technik aufweist.

Diese Aufgabe wird durch die Merkmale von Anspruch 1 gelöst.

Die Ventileinrichtung beinhaltet wenigstens ein getaktet steuerbares erstes Ventil mit wenigstens zwei Schaltzuständen für eine gestufte Be- oder Entlüftung wenigstens der Anschlüsse für die nachgeordnete Anhängersteuerventileinrichtung, wobei in einem ersten Schaltzustand Druckmittel eines Druckmittelreservoirs einem bistabilen, zweiten Ventil und wenigstens dem einen Anschluss für die nachgeordnete Anhängersteuerventileinrichtung zuführbar ist und in einem zweiten Schaltzustand Druckmittel von dem bistabilen zweiten Ventil und von dem einen Anschluss für die nachgeordnete Anhängersteuerventileinrichtung an eine Druckmittelsenke abführbar ist.

Ein solches bistabiles Ventil, welches üblicherweise als ein von zwei Elektromagneten betätigtes elektromagnetisches Ventil ausgebildet ist, wovon ein Elektromagnet das bistabile Ventil bei Bestromung in die eine Schaltstellung und der andere Elektromagnet das bistabile Ventil bei Bestromung in die andere Schaltstellung schaltet, hat die Eigenschaft, im unbestromten Zustand keine bevorzugte Schaltstellung einzunehmen, sondern die durch entsprechende vorangegangene Bestromung hervorgegangene Schaltstellung beizubehalten. Das bistabile zweite Ventil der Ventileinrichtung weist zwei Schaltzustände auf, wobei in einem ersten Schaltzustand Druckmittel eines Druckmittelreservoirs über das getaktet steuerbare erste Ventil dem weiteren Anschluss für die nachgeordnete Anhängersteuerventileinrichtung sowie einem dritten Ventil zuführbar ist und in einem zweiten Schaltzustand Druckmittel von dem weiteren Anschluss für die nachgeordnete Anhängersteuerventileinrichtung sowie von dem dritten Ventil an eine Druckmittelsenke abführbar ist.

Genauso weist das dritte Ventil der Ventileinrichtung zwei Schaltzustände aufweisen, wobei in einem ersten Schaltzustand Druckmittel eines Druckmittelreservoirs über das getaktet steuerbare erste Ventil und das bistabile zweite Ventil einem Steueranschluss ' eines Relaisventils der Ventileinrichtung zuführbar und in einem zweiten Schaltzustand dieser Steueranschluss gesperrt ist. Nicht zuletzt moduliert das Relaisventil abhängig von dem an seinem Steueranschluss anstehenden Druck aus dem Vorratsdruck eines Druckmittelreservoirs einen Druck für die Feststellbremseinrichtung des Zugfahrzeugs.

Durch Umschalten des bistabilen zweiten Ventils von dem ersten Schaltzustand in den zweiten Schaltzustand werden folglich zwei Funktionen gleichzeitig ausgeführt. Zum einen wird der Druck am Steueranschluss des Relaisventils reduziert, was letztlich zu einer Reduzierung des Drucks in den als Feststellbremse verwendeten Federspeicherbremszylindern führt, woraufhin diese zuspannen und das Zugfahrzeug eingebremst halten. Zum ändern wird an dem weiteren Anschluss der Druck reduziert, was aufgrund der üblicherweise invertierenden Funktion einer Anhängersteuerventileinrichtung zu einer Steigerung des Drucks und damit zu einem Zuspannen der als aktive Bremse ausgestalteten Betriebsbremse führt.

Daher wird die Funktionalität der Erzeugung gegenläufiger Drucksignale an den Anschlüssen für die nachgeordnete Anhängersteuerventileinrichtung neben den beschriebenen weiteren Funktionalitäten wie der Fahr-, Streckbrems-, Hilfsbrems- und Testfunktion durch lediglich vier Ventile realisiert. Dies resultiert in einem sehr kompakten Feststellbremsmodul mit vergleichsweise geringen Herstellkosten. Das wenigstens eine weitere Signal des Feststellbremssignalgebers ist dann ein Signal, welchem eine oder mehrere der folgenden Funktionen zugeordnet ist, wobei die Aufzählung nicht abschließend ist:
- Eine Testfunktion zum Testen, ob das Zugfahrzeug mit zugespannter Feststellbremse in der Lage ist, einen angekoppelten, aber ungebremsten Anhänger im Stillstand zu halten, wobei auf das weitere Signal des Feststellbremssignalgebers hin die elektronische Steuereinrichtung das getaktet steuerbare erste Ventil in seinen ersten Schaltzustand, das bistabile zweite Ventil in seinen ersten Schaltzustand und das dritte Ventil in seinen zweiten Schaltzustand steuert,
- eine Fahrfunktion zum Fahren, bei welcher das Zugfahrzeug und der Anhänger ungebremst sind, wobei auf das weitere Signal des Feststellbremssignalgebers hin die elektronische Steuereinrichtung das getaktet steuerbare erste Ventil, das bistabile zweite Ventil sowie das dritte Ventil jeweils in ihren ersten Schaltzustand steuert,
- eine Fahrfunktion zum Fahren mit Streckbremse, bei welcher das Zugfahrzeug ungebremst ist und der Anhänger gebremst wird, wobei auf das weitere Signal des Feststellbremssignalgebers hin die elektronische Steuereinrichtung das getaktet steuerbare erste Ventil getaktet, das bistabile zweite Ventil in seinen ersten Schaltzustand und das dritte Ventil in seinen zweiten Schaltzustand steuert,
- eine Bremsfunktion zum Bremsen mit der Feststellbremse des Zugfahrzeugs und mit der Betriebsbremse des Anhängers bei einem Ausfall der Betriebsbremse des Zugfahrzeugs, wobei auf das weitere Signal des Feststellbremssignalgebers hin die elektronische Steuereinrichtung das erste Ventil in seine erste Schaltstellung, das zweite Ventil getaktet und das dritte Ventil in seine erste Schaltstellung steuert, um die Betriebsbremse des Anhängers bzw. die Federspeicherbremse des Zugfahrzeugs zyklisch zuzuspannen und zu lösen.

Genaueres wird im Rahmen der folgenden Beschreibung eines Ausführungsbeispiels deutlich. Ein Ausführungsbeispiel der Erfindung ist in der Zeichnung dargestellt und in der nachfolgenden Beschreibung näher erläutert. In der Zeichnung zeigt
- Fig.1: einen schematischen Aufbauplan eines Feststellbremsmoduls einer Bremseinrichtung gemäß einer bevorzugten Ausführungsform der Erfindung in der Schaltstellung "Fahren";
- Fig.2: den schematischen Aufbauplan von Fig.1 in der Schaltstellung "Fahren mit Streckbremse";
- Fig.3: den schematischen Aufbauplan von Fig.1 in der Schaltstellung "Bremsen mit Hilfsbremse';
- Fig.4: den schematischen Aufbauplan von Fig.1 in der Schaltstellung "Parken";

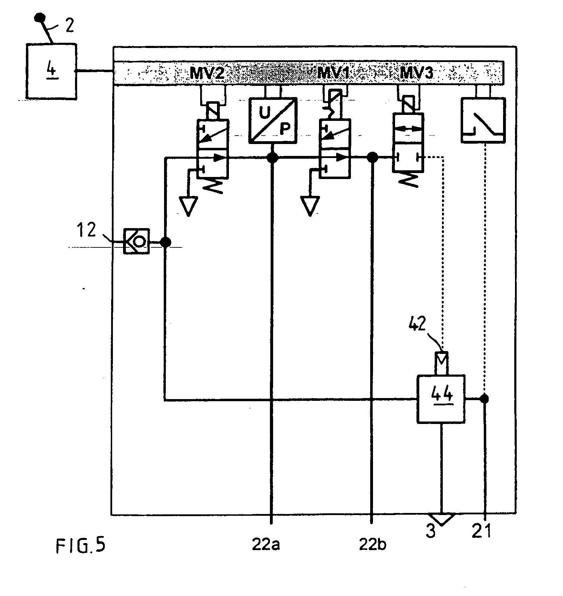

- Fig.5: den schematischen Aufbauplan von Fig.1 in der Schaltstellung "Parken mit Testfunktion".

### Beschreibung des Ausführungsbeispiels

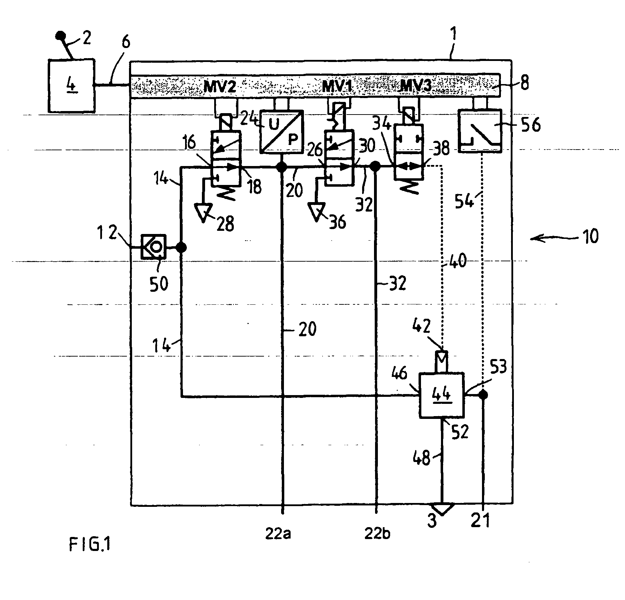

Die in Fig.1 gezeigte bevorzugte Ausführungsform eines Feststellbremsmoduls 20 1 einer druckmittelbetätigten, beispielsweise pneumatisch betätigten Bremseinrichtung einer Zugfahrzeug-Anhängerkombination ist im Zugfahrzeug angeordnet. Die Bremseinrichtung beinhaltet eine Feststellbremseinrichtung mit einem beispielsweise manuell über einen Bedien hebel 2 einstellbaren Feststellbremssignalgeber 4, welcher über eine elektrische Signalleitung 6 durch elektrische Betätigungssignale eine elektronische Steuereinrichtung 8 des Feststellbremsmoduls 1 steuert. Die elektronische Steuereinrichtung 8 ist bevorzugt in das Feststellbremsmodul 1 integriert. In das Feststellbremsmodul 1 ist weiterhin eine von der Steuereinrichtung 8 steuerbare Ventileinrichtung 10 integriert, welche über einen Vorratsanschluss 12 mit Druckluft aus einem hier nicht gezeigten Vorratsluftbehälter versorgt wird.

Von dem Vorratsanschluss 12 des Feststellbremsmoduls 1 erstreckt sich eine Vorratsdruckleitung 14 zu einem Anschluss 16 eines getaktet steuerbaren ersten Ventils MV2, das als von der elektronischen Steuereinrichtung 8 elektrisch steuerbares 3/2-Wegemagnetventil zwei Schaltzustände für eine gestufte Be- oder Entlüftung eines Anschlusses 18 aufweist, welcher über eine Druckleitung 20 mit einem Drucksensor 24 in Verbindung steht, der abhängig von dem in der Druckleitung 20 herrschenden Druck ein elektrisches Drucksignal für die elektronische Steuereinrichtung 8 erzeugt. Weiterhin steht die Druckleitung 20 auch mit einem Anschluss 26 eines bistabilen zweiten Ventils MV1 sowie mit einem Anschluss 22a für eine nachgeordnete, hier nicht gezeigte Anhängersteuerventileinrichtung eines Anhängers in Verbindung.

In einem ersten Schaltzustand führt das getaktet steuerbare erste Ventil MV2 Druckluft unter Vorratsdruck vom Vorratsanschluss 12 dem Anschluss 26 des bistabilen, zweiten Ventils MV1 und über die Druckleitung 20 dem einen Anschluss 22a für die Anhängersteuerventileinrichtung des Anhängers zu.

Generell steuert eine Anhängersteuerventileinrichtung die Betriebsbremseinrichtung eines Anhängers an, welche eingangs beschriebene Betriebsbremszylinder umfasst, die in belüftetem Zustand zuspannen und in entlüftetem Zustand lösen. Weiterhin invertieren solche Anhängersteuerventileinrichtungen den in sie eingesteuerten Druck, d.h. sie invertieren einen einer Belüftung entsprechenden Druck in einen einer Entlüftung entsprechenden Druck und umgekehrt.

In einem zweiten Schaltzustand des getaktet steuerbaren ersten Ventils MV2 wird Druckmittel von dem Anschluss 26 des bistabilen zweiten Ventils MV1 und von dem einen Anschluss 22a für die Anhängersteuerventileinrichtung eines Anhängers des einen Typs an eine Druckmittelsenke abgeführt, welche beispielsweise durch einen Entlüftungsanschluss 28 des getaktet steuerbaren ersten Ventils MV2 gebildet wird.

Das bistabile zweite Ventil MV1, welches beispielsweise als ein von zwei Elektromagneten betätigtes elektromagnetisches Ventil ausgebildet ist, wovon ein Elektromagnet das bistabile Ventil MV1 bei Bestromung in den einen Schaltzustand und der andere Elektromagnet das bistabile Ventil MV1 bei Bestromung in den anderen Schaltzustand schaltet, hat die Eigenschaft, im unbestromten Zustand keine bevorzugte Schaltstellung einzunehmen, sondern die durch entsprechende vorangegangene Bestromung hervorgegangene Schaltstellung beizubehalten.

Das bistabile zweite Ventil MV1 der Ventileinrichtung, welches vorzugsweise ebenfalls als ein von der elektronischen Steuereinrichtung 8 elektrisch steuerbares 3/2-Wegemagnetventil ausgebildet ist, weist zwei Schaltzustände auf, wobei Druckluft über das sich im ersten Schaltzustand befindliche erste Ventil MV2 über einen Anschluss 30 und eine Druckleitung 32 einem weiteren Anschluss 22b für eine Anhängersteuerventileinrichtung eines Anhängers sowie einem dritten Ventil MV3 zuführbar ist und in einem zweiten Schaltzustand Druckluft von dem weiteren Anschluss 22b sowie von einem Anschluss 34 des dritten Ventils MV3 an eine Druckmittelsenke abführbar ist, welche beispielsweise durch einen Entlüftungsanschluss 36 des bistabilen zweiten Ventils MV1 gebildet wird. Hierzu ist der Anschluss 30 des bistabilen zweiten Ventils MV1 über die Druckleitung 32 mit dem Anschluss 34 des dritten Ventils MV3 sowie mit dem Anschluss 22b verbunden.

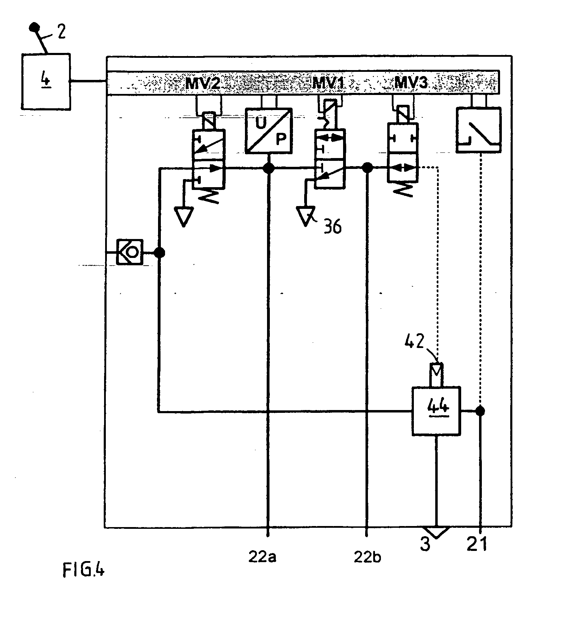

Dieser weitere Anschluss 22b ist für eine unterschiedliche Steuerung der Betriebsbremse eines Anhängers für den Fall vorgesehen, dass die Zugfahrzeug-Anhängerkombination mit eingebremster oder zugespannter Feststellbremse des Zugfahrzeugs geparkt oder abgestellt wird. Diese Situation ist in Fig.4 dargestellt und wird später noch detailliert beschrieben.

Das dritte Ventil MV3 der Ventileinrichtung, welches vorzugsweise ein 2/2-Wegemagnetventil darstellt, weist zwei Schaltzustände auf, wobei in einem ersten Schaltzustand Druckluft über das sich im ersten Schaltzustand befindliche erste Ventil MV2 und das sich im ersten Schaltzustand befindliche bistabile zweite Ventil MV1 über den Anschluss 34, einen Anschluss 38 und eine Steuerdruckleitung 40 einem Steueranschluss 42 eines Relaisventils 44 der Ventileinrichtung zuführbar und in einem zweiten Schaltzustand dieser Steueranschluss 42 von der Druckleitung 32 abgesperrt ist.

Ein Anschluss 46 des Relaisventils 44 ist weiterhin über die Druckleitung 14 mit dem Vorratsanschluss 12 und über eine weitere Druckleitung 48 mit einem Entlüftungsanschluss 3 des Feststellbremsmoduls 1 verbunden. Das Relaisventil 44 moduliert in bekannter Weise abhängig von dem an seinem Steueranschluss 42 anstehenden Druck aus dem am Vorratsanschluss 12 anstehenden Vorratsdruck des Vorratsdruckbehälters einen Druck für einen Anschluss 21 des Feststellbremsmoduls 1 für die Feststellbremseinrichtung des Zugfahrzeugs. Diese Feststellbremseinrichtung beinhaltet neben dem Feststellbremsmodul 1 eingangs beschriebene Federspeicherbremszylinder, welche in belüftetem Zustand lösen und in entlüftetem Zustand zuspannen. Ein Rückschlagventil 50 sorgt dafür, dass keine Druckluft aus der Druckleitung 14 in den Vorratsdruckbehälter rückströmen kann.

Der Drucksensor 24 meldet das Druckniveau an den Anschlüssen 22a und 22b, welche die Betriebsbremsen des Anhängers ansteuern an die elektronische Steuereinrichtung 8, welche über den Bedienhebel 2 des Feststellbremssignalgebers 4 ein beispielsweise gestuftes Bremsanforderungssignal empfangen kann, um beispielsweise durch Taktung des ersten Ventils MV2 den Druck an den Anschlüssen 22a und 22b bzw. 21 auf einen Solldruck einzuregeln.

Weiterhin steht der mit dem Anschluss 21 für die Feststellbremseinrichtung des Zugfahrzeugs verbundene Ausgang 53 des Relaisventils 44 über eine Druckleitung 54 mit einem Druckschalter 56 in Verbindung, welcher ein Signal in die elektronische Steuereinrichtung 8 einsteuert, wenn der am Anschluss 21 herrschende Druck einen vorgegebenen Schwellwert überschreitet. Mit der Funktion dieses Druckschalters 56 lässt sich das Drucksignal des Drucksensors 24 plausibilisieren.

Vor diesem Hintergrund ist die Funktionsweise des Feststellbremsmoduls 1 wie folgt :

In Fig.1 ist der Schaltzustand der Ventile MV1, MV2 und MV3 im Betriebsmodus "Fahren" gezeigt, welchen der Fahrer an dem Bedienhebel 2 des Feststellbremssignalgebers 4 einstellen kann. Dann befinden sich das getaktet steuerbare erste Ventil MV2, das bistabile zweite Ventil MV1 sowie das dritte Ventil MV3 jeweils in ihren ersten Schaltzuständen, wodurch Vorratsdruck vom Vorratsanschluss 12 an die beiden Anschlüsse 22a, 22b für das nachgeordnete Anhängersteuerventileinrichtung ausgesteuert wird, um diese zu belüften. In der Praxis ist jedoch nur einer dieser Anschlüsse 22a oder 22b belegt, weil nur ein Anhänger vom Zugfahrzeug gezogen wird. Die Invertierung durch die betreffende Anhängersteuerventileinrichtung führt zu einer Entlüftung der Betriebsbremse des Anhängers, wodurch diese gelöst wird oder bleibt. Weiterhin führen diese Schaltzustände der Ventile MV1, MV2 und MV3 auch zu einer Druckbeauschlagung des Steueranschlusses 42 der Relaisventils 44, wodurch dieses den Anschluss 21 für die Federspeicherbremse des Zugfahrzeugs moduliert belüftet, was in einem Gelösthalten oder Lösen der entsprechenden Federspeicherbremszylinder resultiert.

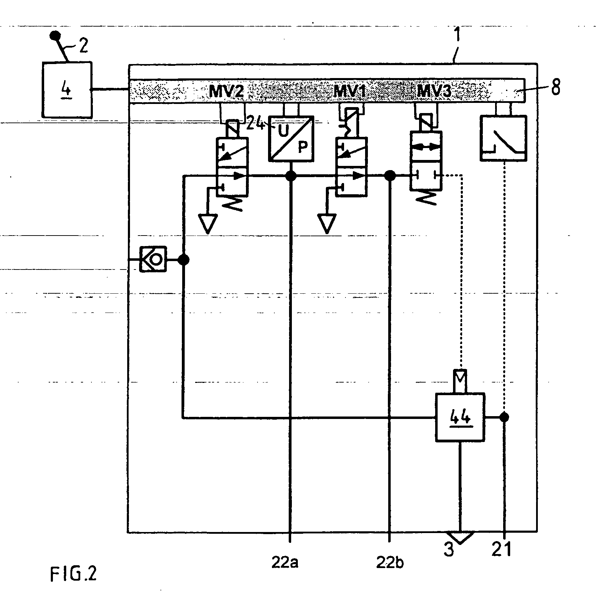

Wenn im Betriebsmodus "Fahren" die Zugfahrzeug-Anhängerkombination einknickt, kann sie der Fahrer durch manuelle Betätigung der Streckbremse wieder gerade stellen. Dies erfolgt dadurch, dass der Fahrer den Bedienhebel 2 des Feststellbremssignalgebers 4 in eine dafür vorgesehene Stellung bringt und erforderlichenfalls zwischen der Stellung "Fahren" und "Streckbremsen" hin und her schaltet, bis die Geradestellung erfolgt ist. Denn zum Streckbremsen werden nur die Betriebsbremsen des Anhängers betätigt, die Bremsen des Zugfahrzeugs jedoch nicht. Diese Situation ist in Fig.2 dargestellt. Der durch den Bedienhebel 2 entsprechend betätigte Feststellbremssignalgeber 4 liefert ein elektrisches Signal an die elektronische Steuereinrichtung 8 des Feststellbremsmoduls 1, woraufhin das dritte Ventil MV3 in seinen zweiten Schaltzustand, den Sperrzustand geschaltet wird. Dadurch wird eine Steuerkammer des Relaisventils 44 von der Druckluftversorgung abgekoppelt und hält das durch den Betriebsmodus "Fahren" zuvor hergestellte hohe Druckniveau, wodurch im Resultat die Federspeicherbremszylinder des Zugfahrzeugs gelöst bleiben.

Zum Steckbremsen kann der Fahrer daher das erste Ventil MV2 durch den Bedienhebel 2 getaktet ansteuern, d.h. es wird wiederholt von seinem ersten Schaltzustand in den zweiten Schaltzustand geschaltet, um eine wechselweise Belüftung und Entlüftung der Anschlüsse 22a, 22b zu erzielen, so dass an den beiden Anschlüssen 22a und 22b Druckluft mit zeitlich gestuftem Druck ansteht, um die Betriebsbremsen des Anhängers wechselweise solange zuzuspannen und wieder zu lösen, bis die Zugfahrzeug-Anhängerkombination wieder geradegestellt ist. Das bistable zweite Ventil MV1 verbleibt dabei in seinem ersten Schaltzustand, in welchem es den durch das erste Ventil MV2 getakteten Druck an den Anschluss 22b durchsteuern kann. Über den Drucksensor 24 und die elektronische Steuereinrichtung 8 ist dabei eine Druckregelung an den Anschlüssen 22a und 22b möglich.

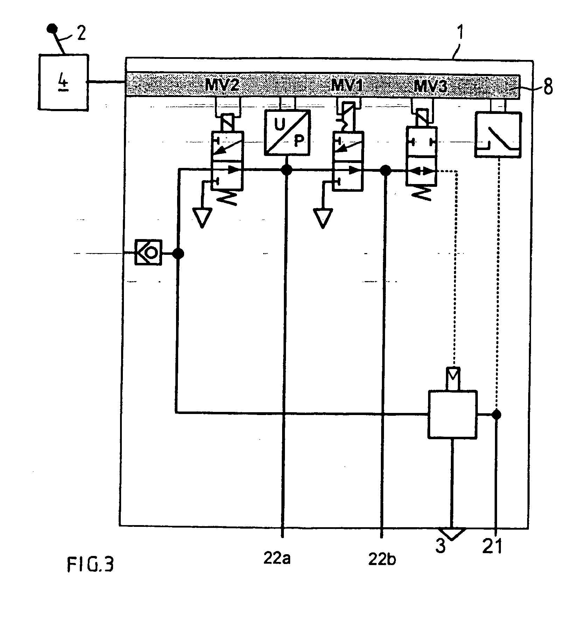

Falls die Betriebsbremsen des Zugfahrzeugs ausfallen, hat der Fahrer die Möglichkeit, die Zugfahrzeug-Anhängerkombination einzubremsen, indem er durch eine entsprechende Betätigung des Bedienhebels 2 des Feststellbremssignalgebers 4 ein gestuftes Bremsen mit der Federspeicherbremse des Zugfahrzeugs und mit der Betriebsbremse des Anhängers hervorruft. Diese Situation ist in Fig.3 dargestellt. Hierzu sendet der Feststellbremssignalgeber 4 ein entsprechendes elektrisches Signal an die elektronische Steuereinrichtung 8 des Feststellbremsmoduls 1, um das zweite Ventil MV1 entsprechend zu takten, d.h. es wiederholt von seinem ersten Schaltzustand in den zweiten Schaltzustand zu schalten, um eine wechselweise Belüftung und Entlüftung der Anschlüsse 21 sowie 22a, 22b zu erzielen. Das dadurch hervorgerufene zyklische Zuspannen und Lösen der Betriebsbremsen des Anhängers bzw. der Federspeicherbremsen des Zugfahrzeugs kommt einer Komfortbremsung mit einer gewissen Antiblockierfunktion gleich.

Für den Fall, dass die Zugfahrzeug-Anhängerkombination abgestellt oder geparkt werden soll, wird der Bedienhebel 2 des Feststellbremssignalgebers 4 in die Position "Parken" gebracht, was dazu führt, dass das bistabile zweite Ventil MV1 in seinen zweiten Schaltzustand überführt wird (Fig.4), in welchem der weitere Anschluss 22b über den Entlüftungsanschluss 36 des zweiten Ventils MV1 entlüftet wird, ebenso wie Druckluft vom Steueranschluss 42 des Relaisventils 44 über das in seiner ersten Schaltstellung verbleibende dritte Ventil MV3 durch den Entlüftungsanschluss 36 entlüftet wird, was letztlich eine Entlüftung der Federspeicherbremszylinder des Zugfahrzeugs und damit deren Zuspannen zur Folge hat. Demgegenüber steht über das weiterhin in seiner ersten Schaltstellung verbleibende erste Ventil MV2 Druckluft unter Vorratsdruck an dem einen Anschluss 22a für die Anhängersteuerventileinrichtung des Anhängers an, welcher dadurch belüftet wird.

In dieser Stellung des Bedienhebels 2 erfolgt daher eine gegenläufige Be- und Entlüftung der Anschlüsse 22a und 22b. Dies hat zur Folge, dass mit dem Feststellbremsmodul 1 des Zugfahrzeugs verschiedene Funktionalitäten von Anhängern im Hinblick auf das Verhalten im geparkten bzw. abgestellten Zustand bedient werden können. Wenn die Anhängersteuerventileinrichtung des Anhängers an den einen Anschluss 22a des Feststellbremsmoduls 1 angeschlossen wird, so bleibt die Betriebsbremse des Anhängers im abgestellten oder geparkten Zustand der Zugfahrzeug-Anhängerkombination gelöst. Wenn demgegenüber die Anhängesteuerventileinrichtung des Anhängers mit dem Anschluss 22b verbunden wird, wird die Betriebsbremse des Anhängers im abgestellten oder geparkten Zustand der Zugfahrzeug-Anhängerkombination zugespannt. Durch die Invertierung durch die Anhängersteuerventileinrichtung wird demzufolge die im geparkten Zustand erfolgende Belüftung oder Druckbeaufschlagung des einen Anschlusses 22a in eine Entlüftung der Betriebsbremszylinder des Anhängers und die Entlüftung oder Druckabsenkung am Anschluss 22b in eine Belüftung der Betriebsbremszylinder des Anhängers gewandelt, wodurch die Betriebsbremsen des Anhängers lösen.

Wenn ausgehend von dem in Fig.4 dargestellten Betriebsmodus "Stand" durch eine entsprechende Einstellung des Bedienhebels 2 die Testfunktion gewählt wird, bei welcher geprüft wird, ob das mit der Feststellbremse eingebremste Zugfahrzeug den ungebremsten Anhänger im Stand halten kann, so wird gegenüber dem Schaltzustand von Fig.4 lediglich das dritte Ventil MV3 in seinen zweiten Schaltzustand überführt, in welchem es den Steueranschluss 42 des Relaisventils 44 abkoppelt und so die Federspeicherbremszylinder des Zugfahrzeugs entlüftet und damit zugespannt hält. Demgegenüber wird das bistable zweite Ventil MV1 in seinen ersten Schaltzustand überführt, in welchem es bei im ersten Schaltzustand befindlichem ersten Ventil MV2 den weiteren Anschluss 22b mit dem Vorratsanschluss 12 verbindet, um diesen Anschluss 22b zu belüften, was aufgrund der Invertierungsfunktion der Anhängersteuerventileinrichtung in einer Entlüftung der Betriebsbremszylinder des Anhängers und damit zum Bremslösen führt. Andererseits wird dadurch auch der eine Anschluss 22a belüftet, was zur gleichen Konsequenz führt. Insgesamt werden daher die Betriebsbremsen des Anhängers zum Zwecke der oben beschriebenen Testfunktion gelöst.

Bei dem bevorzugten Ausführungsbeispiel ist der Feststellbremssignalgeber 4 ein manuell einstellbares Bedienteil. Ebenso könnten die Signale für die Steuereinrichtung 8 jedoch auch von einer externen Einheit, beispielsweise von einem Hillholder stammen, welcher die elektrischen Signale automatisch erzeugt.

Es versteht sich weiterhin, dass wenn an den einen Anschluss 22a oder an den anderen Anschluss 22b eine Anhängersteuerventileinrichtung eines Anhängers angeschlossen wird, der jeweils andere Anschluss 22b bzw. 22a druckdicht verschlossen wird.

### Bezugszahlenliste

- 1: Feststellbremsmodul
- 2: Bedienhebel
- 3: Entlüftungsanschluss
- 4: Feststellbremssignalgeber
- 6: Signalleitung
- 8: Steuereinrichtung
- 10: Ventileinrichtung
- 12: Vorratsanschluss
- 14: Vorratsdruckleitung
- 16: Anschluss
- 18: Anschluss
- 20: Druckleitung
- 21: Anschluss
- 22a/b: Anschlüsse
- 24: Drucksensor
- 26: Anschluss
- 28: Entlüftungsanschluss
- 30: Anschluss
- 32: Druckleitung
- 34: Anschluss
- 36: Entlüftungsanschluss
- 38: Anschluss
- 40: Steuerdruckleitung
- 42: Steueranschluss
- 44: Relaisventil
- 46: Anschluss
- 48: Druckleitung
- 50: Rückschlagventil
- 52: Ausgang
- 53: Ausgang
- 54: Druckleitung
- 56: Druckschalter

## Patentansprüche

1. Druckmittelbetätigte Bremseinrichtung für ein Zugfahrzeug einer Zugfahrzeug-Anhängerkombination, beinhaltend eine Feststellbremseinrichtung mit einem ein wenigstens einem geparkten oder abgestellten Zustand des Zugfahrzeugs entsprechendes elektrisches Signal erzeugenden Feststellbremssignalgeber (4), welcher durch das elektrische Signal eine elektronische Steuereinrichtung (8) eines Feststellbremsmoduls (1) steuert, in welches eine Ventileinrichtung (MV1, MV2, MV3, 44) sowie ein be- oder entlüftbarer Anschluss (22a) für eine nachgeordnete Anhängersteuerventileinrichtung integriert sind, welche die Betriebsbremsen des Anhängers steuert, wobei das Feststellbremsmodul (1) wenigstens einen weiteren Anschluss (22b) für eine nachgeordnete Anhängersteuerventileinrichtung aufweist und dass die Ventileinrichtung (MV1, MV2, MV3, 44) derart ausgebildet und von der elektronischen Steuereinrichtung (8) derart ansteuerbar ist, dass auf das dem geparkten oder abgestellten Zustand des Zugfahrzeugs entsprechende Signal des Feststellbremssignalgebers (4) hin die Feststellbremse des Zugfahrzeugs zugespannt und der eine Anschluss (22a) belüftet und der weitere Anschluss (22b) entlüftet wird und dass auf wenigstens ein weiteres Signal des Feststellbremssignalgebers (4) hin der eine Anschluss (22a) und der wenigstens eine weitere Anschluss (22b) gleichläufig be- oder entlüftet werden, wobei
- die Ventileinrichtung ein getaktet steuerbares erstes Ventil (MV2) mit wenigstens zwei Schaltzuständen für eine gestufte Be- oder Entlüftung wenigstens der Anschlüsse (22a, 22b) für die nachgeordnete Anhängersteuerventileinrichtung beinhaltet, wobei in einem ersten Schaltzustand Druckmittel eines Druckmittelreservoirs einem bistabilen, zweiten Ventil (MV1) der Ventileinrichtung und wenigstens dem einen Anschluss (22a) für die eine nachgeordnete Anhängersteuerventileinrichtung zuführbar ist und in einem zweiten Schaltzustand Druckmittel von dem bistabilen zweiten Ventil (MV1) und von dem einen Anschluss (22a) für die nachgeordnete Anhängersteuerventileinrichtung an eine Druckmittelsenke (28) abführbar ist, und
- das bistabile zweite Ventil (MV1) der Ventileinrichtung zwei Schaltzustände aufweist, wobei in einem ersten Schaltzustand Druckmittel eines Druckmittelreservoirs über das getaktet steuerbare erste Ventil (MV2) dem weiteren Anschluss (22b) für die nachgeordnete Anhängersteuerventileinrichtung sowie einem dritten Ventil (MV3) der Ventileinrichtung zuführbar ist und in einem zweiten Schaltzustand Druckmittel von dem weiteren Anschluss (22b) für die nachgeordnete Anhängersteuerventileinrichtung sowie von dem dritten Ventil (MV3) an eine Druckmittelsenke (36) abführbar ist, und
- das dritte Ventil (MV3) der Ventileinrichtung zwei Schaltzustände aufweist, wobei in einem ersten Schaltzustand Druckmittel eines Druckmittelreservoirs über das getaktet steuerbare erste Ventil (MV2) und das bistabile zweite Ventil (MV1) einem Steueranschluss (42) eines Relaisventils (44) der Ventileinrichtung zuführbar und in einem zweiten Schaltzustand dieser Steueranschluss (42) abgesperrt ist, und
- das Relaisventil (44) abhängig von dem an seinem Steueranschluss (42) anstehenden Druck aus dem Vorratsdruck eines Druckmittelreservoirs einen Druck für die Feststellbremseinrichtung des Zugfahrzeugs moduliert, **dadurch gekennzeichnet, dass** das wenigstens eine weitere Signal des Feststellbremssignalgebers (4) ein Signal ist, dem eine oder mehrere der folgenden Funktionen zugeordnet ist:
- Eine Testfunktion zum Testen, ob das Zugfahrzeug mit zugespannter Feststellbremse in der Lage ist, einen angekoppelten, aber ungebremsten Anhänger im Stillstand zu halten, wobei auf das weitere Signal des Feststellbremssignalgebers (4) hin die elektronische Steuereinrichtung (8) das getaktet steuerbare erste Ventil (MV2) in seinen ersten Schaltzustand, das bistabile zweite Ventil (MV1) in seinen ersten Schaltzustand und das dritte Ventil (MV3) in seinen zweiten Schaltzustand steuert,
- eine Fahrfunktion zum Fahren, bei welcher das Zugfahrzeug und der Anhänger ungebremst sind, wobei auf das weitere Signal des Feststellbremssignalgebers (4) hin die elektronische Steuereinrichtung (8) das getaktet steuerbare erste Ventil (MV2), das bistabile zweite Ventil (MV1) sowie das dritte Ventil (MV3) jeweils in ihren ersten Schaltzustand steuert,
- eine Fahrfunktion zum Fahren mit Streckbremse, bei welcher das Zugfahrzeug ungebremst ist und der Anhänger gebremst wird, wobei auf das weitere Signal des Feststellbremssignalgebers (4) hin die elektronische Steuereinrichtung (8) das getaktet steuerbare erste Ventil (MV2) getaktet, das bistabile zweite Ventil (MV1) in seinen ersten Schaltzustand und das dritte Ventil (MV3) in seinen zweiten Schaltzustand steuert,
- eine Bremsfunktion zum Bremsen mit der Feststellbremse des Zugfahrzeugs und mit der Betriebsbremse des Anhängers bei einem Ausfall der Betriebsbremse des Zugfahrzeugs, wobei auf das weitere Signal des Feststellbremssignalgebers (4) hin die elektronische Steuereinrichtung (8) das getaktet steuerbare erste Ventil (MV2) in seine erste Schaltstellung, das zweite Ventil (MV1) getaktet und das dritte Ventil (MV3) in seine erste Schaltstellung steuert, um die Betriebsbremse des Anhängers bzw. die Federspeicherbremse des Zugfahrzeugs zyklisch zuzuspannen und zu lösen.

2. Bremseinrichtung nach Anspruch 1, **dadurch gekennzeichnet, dass** in einer Druckmittelleitung (20) zwischen dem getaktet steuerbaren ersten Ventil (MV2) und dem bistabilen zweiten Ventil (MV1) wenigstens ein Drucksensor (24) angeordnet ist.

3. Bremseinrichtung nach einem der vorhergehenden Ansprüche, **dadurch gekennzeichnet, dass** ein mit der Feststellbremseinrichtung des Zugfahrzeugs verbundener Anschluss (21) des Feststellbremsmoduls (1) mit einem Druckschalter (56) in Verbindung steht, welcher ein Signal in die elektronische Steuereinrichtung (8) einsteuert, wenn der am Anschluss (21) herrschende Druck einen vorgegebenen Schwellwert überschreitet.

4. Bremseinrichtung nach einem der vorhergehenden Ansprüche, **dadurch gekennzeichnet, dass** der Feststellbremssignalgeber (4) manuell betätigt ist und das dem geparkten oder abgestellten Zustand des Zugfahrzeugs entsprechende Signal und das wenigstens eine weitere Signal abhängig von der Stellung eines Bedienhebels (2) des Feststellbremssignalgebers (4) erzeugt werden.

## Claims

1. Braking device operated by a pressurised medium in a tractor vehicle of a tractor vehicle/trailer combination, including a parking brake means with a parking brake signal generator (4) generating an electrical signal corresponding to at least one parked or stopped condition of the tractor vehicle, which generator controls an electronic controller means (8) of a parking brake module (1) by said electrical signal, into which module a valve means (MV1, MV2, MV3, 44) as well as a port (22a) for a downstream trailer control valve means is integrated, which is adapted to be ventilated or bled, which trailer control valve means controls the service brakes of the trailer, with said parking brake module (1) comprising at least one further port (22b) for a downstream trailer control valve means and wherein said valve means (MV1, MV2, MV3, 44) is so configured and controllable by said electronic control means (8) in such a way that said parking brake of said tractor vehicle is applied and said one port (22a) is ventilated and said further port (22b) is bled in response to said signal of said parking brake signal generator (4), which correspond to the parked or stopped condition of said tractor vehicle, and wherein said one port (22a) and said at least one further port (22b) are ventilated or bled in the same sense in response to at least one further signal of said parking brake signal generator (4), wherein
- said valve means includes a first valve (MV2) adapted to be controlled in a clocked manner, with at least two switching states for a stepped ventilation or bleeding function of at least said ports (22a, 22b) for said downstream trailer control valve means, with some compressed medium of a compressed-medium reservoir being supplied, in a first switching state, to a bistable second valve (MV1) of said valve means and at least to said one port (22a) for a downstream trailer control valve means, whilst, in a second switching state, some compressed medium can be discharged from said bistable second valve (MV1) and from said one port (22a) for said downstream trailer control valve means to a compressed-medium sink (28), and
- wherein said bistable second valve (MV1) of said valve means presents two switching states, wherein, in a first switching state, some compressed medium of a compressed-medium reservoir can be supplied via said first valve (MV2), adapted to be controlled in a clocked manner, to said further port (22b) for said downstream trailer control valve means as well as to a third valve (MV3) of said valve means, and wherein, in a second switching state, some compressed medium can be discharged from said further port (22b) for said downstream trailer control valve means as well as from said third valve (MV3) to a compressed-medium sink (36), and
- wherein said third valve (MV3) of said valve means presents two switching states, wherein, in a first switching state, some compressed medium of a compressed-medium reservoir can be supplied via said first valve (MV2), adapted to be controlled in a clocked manner, and said bistable second valve (MV1) to a control port (42) of a relay valve (44) of said valve means and, in a second switching state, said control port (42) is shut off, and
- wherein said relay valve (44) modules a pressure for said parking brake means of said tractor vehicle as a function of the pressure from the reservoir pressure of a compressed-medium reservoir, which is applied to its control port (42), **characterized in that** said at least one further signal of said parking brake signal generator (4) is a signal to which one or several of the following functions are assigned:
- a testing function for testing whether the tractor vehicle with the parking brake applied is in the position to keep a trailer coupled to it but not braked in a standstill state, wherein, in response to said further signal of said parking brake signal generator (4), said electronic controller means (8) controls said first valve (MV2), controllable in a clocked manner, into its first switching state, said bistable second valve (MV1) into its first switching state and said third valve (MV3) into its second switching state,
- a driving function for driving, in which said tractor vehicle and said trailer are not braked, wherein, in response to said further signal of said parking brake signal generator (4), said electronic controller means (8) controls said first valve (MV2), controllable in a clocked manner, said bistable second valve (MV1) as well as said third valve (MV3) into their respective first switching state,
- a driving function for driving with the anti-jack-knife brake function, wherein said tractor vehicle is not braked and said trailer is braked, wherein, in response to said further signal of said parking brake signal generator (4), said electronic controller means (8) controls said first valve (MV2), controllable in a clocked manner, in a clocked manner, said bistable second valve (MV1) into its first switching state and said third valve (MV3) into its second switching state,
- a braking function for braking with the parking brake of said tractor vehicle and with the service brake of said trailer in the event of failure of the service brake of said tractor vehicle, wherein, in response to said further signal of said parking brake signal generator (4), said electronic controller means (8) controls said first valve (MV2), controllable in a clocked manner, into its first switching state, said second valve (MV1) in a clocked manner and said third valve (MV3) into its first switching position in order to apply and to release cyclically the service brake of said trailer or the spring-loaded brake of said tractor vehicle.

2. Braking device according to Claim 1, **characterized in that** at least one pressure sensor (24) is disposed in a compressed-medium line (20) between said first valve (MV2), controllable in a clocked manner, and said bistable second valve (MV1).

3. Braking device according to any of the preceding Claims, **characterized in that** a port (21) of said parking brake module (1), which is connected to said parking brake means of said tractor vehicle, communicates with a pressure switch (56) that directs a signal into said electronic controller means (8) when the pressure applied at said port (21) exceeds a predetermined threshold value.

4. Braking device according to any of the preceding Claims, **characterized in that** said parking brake signal generator (4) is manually operated and that the signal corresponding to the parked or stopped condition of the tractor vehicle and said at least one further signal are generated as a function of the position of an operating lever (2) of said parking brake signal generator (4).

## Revendications

1. Dispositif de freinage actionné par un milieu sous pression dans un véhicule tracteur d'une combinaison véhicule tracteur/remorque, comprenant un moyen à frein de stationnement à un générateur de signaux du frein de stationnement (4), qui engendre un signal électrique en correspondance avec au moins un état stationné ou arrête du véhicule tracteur, ce générateur commandant un moyen de commande électronique (8) d'un module de frein de stationnement (1) par ledit signal électrique, dans lequel module un moyen à soupape (MV1, MV2, MV3, 44) ainsi qu'un raccord (22a) pour un moyen à soupape de commande de remorque en aval sont intégrés, qui est apte à être aéré ou purgé, lequel moyen à soupape de commande de remorque commande les the freins de service de la remorque, audit module de frein de stationnement (1) comprenant au moins un seul raccord supplémentaire (22b) pour un moyen à soupape de commande de remorque en aval, et dans lequel ledit moyen à soupape (MV1, MV2, MV3, 44) est configure dans une telle façon, que ledit frein de stationnement dudit véhicule tracteur soit serré et ledit seul raccord (22a) soit aéré et ledit raccord supplémentaire (22b) soit purgé en réponse audit signal dudit générateur de signaux du frein de stationnement (4), qui correspondent à l'état stationné ou arête dudit véhicule tracteur, et dans lequel ledit seul raccord (22a) et ledit au moins seul raccord supplémentaire (22b) sont aéré or purgé en même sens en réponse à au moins un seul signal supplémentaire dudit générateur de signaux du frein de stationnement (4), dans lequel
- ledit moyen à soupape renferme une première soupape (MV2) apte à être commandé en cadence, à au moins deux états de commutation pour une fonction de ventilation ou de purge en gradins d'au moins lesdits raccords (22a, 22b) pour ledit moyen à soupape de commande de remorque en aval, à du milieu sous pression d'un réservoir de milieu sous pression étant alimenté, en un premier état de commutation, à une deuxième soupape bistable (MV1) dudit moyen à soupape et au moins audit seul raccord (22a) pour un moyen à soupape de commande de remorque en aval, pendant qu'en un deuxième état de commutation, du milieu sous pression peut être évacué en dehors de ladite deuxième soupape bistable (MV1) et en dehors dudit seul raccord (22a) pour ledit moyen à soupape de commande de remorque en aval vers un puits de milieu sous pression (28), et
- dans lequel ladite deuxième soupape bistable (MV1) dudit moyen à soupape présente deux états de commutation, dans lequel, en un premier état de commutation, du milieu sous pression d'un réservoir de milieu sous pression peut être alimenté via ladite première soupape (MV2), apte à être commandé en cadence, vers ledit raccord supplémentaire (22b) pour ledit moyen à soupape de commande de remorque en aval ainsi qu'à une troisième soupape (MV3) dudit moyen à soupape, et dans lequel, en un deuxième état de commutation, du milieu sous pression peut être évacué en dehors dudit raccord supplémentaire (22b) pour ledit moyen à soupape de commande de remorque en aval ainsi qu'en dehors de ladite troisième soupape (MV3) vers un puits de milieu sous pression (36), et
- dans lequel ladite troisième soupape (MV3) dudit moyen à soupape présente deux états de commutation, dans lequel, en un premier état de commutation, du milieu sous pression d'un réservoir de milieu sous pression peut être alimenté via ladite première soupape (MV2), apte à être commandé en cadence, et ladite deuxième soupape bistable (MV1) vers un raccord de commande (42) d'une soupape de relais (44) dudit moyen à soupape et, en un deuxième état de commutation, ledit raccord de commande (42) est arrêté, et
- dans lequel ladite soupape de relais (44) module une pression pour ledit moyen à frein de stationnement dudit véhicule tracteur en fonction de la pression de la pression de réservoir d'un réservoir de milieu sous pression, qui est appliqué à son raccord de commande (42), **caractérisé en ce que** ledit au moins seul signal supplémentaire dudit générateur de signaux du frein de stationnement (4) set un signal auquel sont affecté une ou plusieurs des fonctions suivantes:
- une fonction d'épreuve à tester, si le véhicule tracteur au frein de stationnement serré est en position de maintenir une remorque y accouplée mais en état non freiné en une condition d'arrêt, dans laquelle, en réponse audit signal supplémentaire dudit générateur de signaux du frein de stationnement (4), ledit moyen de commande électronique (8) commande ladite première soupape (MV2), apte à être commandé en cadence, en son premier état de commutation, ladite deuxième soupape bistable (MV1) en son premier état de commutation et ladite troisième soupape /MV3) en son deuxième état de commutation,
- une fonction de roulement, dans laquelle ledit véhicule tracteur et ladite remorque ne sont pas freinés, dans laquelle, en réponse audit signal supplémentaire dudit générateur de signaux du frein de stationnement (4), ledit moyen de commande électronique (8) commande ladite première soupape (MV2), apte à être commandé en cadence, ladite deuxième soupape bistable (MV1) ainsi que ladite troisième soupape (MV3) en leurs premiers état de commutation respectifs,
- une fonction de roulement à rouler avec la fonction empêchant la déviation, dans laquelle ledit véhicule tracteur n'est pas freiné et ladite remorque est freinée, dans laquelle, en réponse audit signal supplémentaire dudit générateur de signaux du frein de stationnement (4), ledit moyen de commande électronique (8) commande ladite première soupape (MV2), apte à être commandé en cadence, ladite deuxième soupape bistable (MV1) en son premier état de commutation et ladite troisième soupape (MV3) en son deuxième état de commutation,
- une fonction de freinage pour le freinage moyennant le frein de stationnement dudit véhicule tracteur et moyennant le frein de service de ladite remorque au cas de défaillance du frein de service dudit véhicule tracteur, dans laquelle, en réponse audit signal supplémentaire dudit générateur de signaux du frein de stationnement (4), ledit moyen de commande électronique (8) commande ladite première soupape (MV2), apte à être commandé en cadence, en son premier état de commutation, ladite deuxième soupape (MV1) en cadence et ladite troisième soupape (MV3) en sa première position de commutation afin de serrer et de desserrer de manière cyclique le frein de service de ladite remorque ou le frein à ressort dudit véhicule tracteur.

2. Dispositif de freinage selon la revendication 1, **caractérisé en ce qu'**au moins un capteur de pression (24) est disposé dans un conduit de milieu sous pression (20) entre ladite première soupape (MV2), apte à être commandé en cadence, et ladite deuxième soupape bistable (MV1).

3. Dispositif de freinage selon une quelconque des revendications précédentes, **caractérisé en ce qu'**un raccord (21) dudit module de frein de stationnement (1), qui est relié audit moyen à frein de stationnement dudit véhicule tracteur, se trouve en communication avec un interrupteur à pression (56), qui commande un signal dans ledit moyen de commande électronique (8), quand la pression appliquée audit raccord (21) dépasse une valeur de seuil prédéterminée.

4. Dispositif de freinage selon une quelconque des revendications précédentes, **caractérisé en ce que** ledit générateur de signaux du frein de stationnement (4) est actionné manuellement et **en ce que** le signal correspondant à l'état stationné ou arête du véhicule tracteur et ledit au moins seul signal supplémentaire sont engendrés en fonction de la position d'un levier d'actionnement (2) dudit générateur de signaux du frein de stationnement (4).
